# EUROPÄISCHE PATENTSCHRIFT

(11) **EP 3 835 123 B1**
(45) Veröffentlichungstag und Bekanntmachung des Hinweises auf die Patenterteilung: **07.09.2022**
(21) Anmeldenummer: 20000443.0
(22) Anmeldetag: 09.12.2020
(51) Int. Cl.: B60N 2/50, B60N 2/39

(54) **FAHRZEUGSITZ MIT EINER FEDEREINHEIT ZUM FEDERN VON WANK- UND VERTIKALFEDERBEWEGUNG**
VEHICLE SEAT WITH A SPRING UNIT FOR PROVIDING SUSPENSION FOR ROLLING AND VERTICAL SPRING MOVEMENT
SIÈGE DE VÉHICULE DOTÉ D'UNITÉ DE RESSORT PERMETTANT DE FAIRE RESSORT DU MOUVEMENT DE RESSORT VERTICAL ET DE ROULIS

(30) Priorität: 13.12.2019 DE 102019134233
(43) Veröffentlichungstag der Anmeldung: 16.06.2021
(73) Patentinhaber: GRAMMER AG, 92289 Ursensollen (DE)
(72) Erfinder: Dotzler, Florian, 92242 Hirschau (DE); Krivenkov, Konstantin, 92224 Amberg (DE)
(74) Vertreter: Hannke Bittner & Partner

(56) Entgegenhaltungen:
- EP-A1- 3 680 129
- EP-A2- 2 463 146
- WO-A1-2009/054788
- FR-A- 912 187
- FR-A1- 2 418 721
- US-A1- 2014 316 661

## Beschreibung

Die Erfindung betrifft einen Fahrzeugsitz mit einer Federeinheit zum Federn von Wank- und Vertikalfederbewegungen des Fahrzeugs, wobei der Fahrzeugsitz ein Fahrzeugsitzoberteil und ein Fahrzeugsitzunterteil aufweist, wobei das Fahrzeugsitzoberteil und das Fahrzeugsitzunterteil mittels der Federeinheit verbunden sind, sodass das Fahrzeugsitzoberteil und das Fahrzeugsitzunterteil relativ zueinander bewegbar sind, wobei die Federeinheit eine Scherenanordnung mit einem ersten Scherenarm und einem zweiten Scherenarm aufweist. Fahrzeugsitze mit Wank- und Vertikalfederungen sind auf dem Stand der Technik bekannt, beispielsweise ist aus der WO 2014/176130 A eine Wankfederung bekannt, welche Wankbewegungen des Fahrzeugs beziehungsweise des Fahrzeugsitzes abfedern kann. Eine derartige Wankbewegung, wie im Stand der Technik dargestellt, ist jedoch konstruktiv sehr aufwendig umzusetzen, erfordert viele aktiv gesteuerte Komponenten und beansprucht einen großen Bauraum. EP 2463146 zeigt einen Fahrzeugsitz mit einer oberen Federeinheit mit Scherengestell zum Federn der Vertikalbewegungen des Fahrzeugsitzes und mit einer unteren Pendeleinheit zum Ausgleich der Wankbewegungen des Sitzes.

Es ist daher Aufgabe der vorliegenden Erfindung, einen Fahrzeugsitz mit einer Federeinheit zum Federn von Wank- und Vertikalfederbewegungen bereitzustellen, welche konstruktiv einfacher als im Stand der Technik dargestellt ausgebildet ist.

Die zugrundeliegende Aufgabe der vorliegenden Anmeldung wir durch einen Fahrzeugsitz mit den Merkmalen des Patentanspruches 1 gelöst.

Kerngedanke der vorliegenden Erfindung ist es, einen Fahrzeugsitz mit einer Federeinheit mit einem Federelement zum

Federn von Wank- und Vertikalfederbewegungen des Fahrzeugs bereitzustellen, wobei der Fahrzeugsitz ein Fahrzeugsitzoberteil und ein Fahrzeugsitzunterteil aufweist, wobei bei der Wankbewegung des Fahrzeugsitzes eine Drehung des Fahrzeugsitzoberteils gegenüber dem Fahrzeugsitzunterteil um eine erste Drehachse stattfindet, wobei das Fahrzeugsitzoberteil und das Fahrzeugsitzunterteil mittels der Federeinheit verbunden sind, sodass das Fahrzeugsitzoberteil und das Fahrzeugsitzunterteil relativ zueinander bewegbar sind, wobei die Federeinheit eine Scherenanordnung mit einem ersten Scherenarm und einem zweiten Scherenarm aufweist, wobei die Federeinheit drehbar um die erste Drehachse mit dem Fahrzeugsitzunterteil verbunden ist und einen Federelementträger umfasst, wobei das erste Federelement einerseits mit dem Fahrzeugsitzunterteil und andererseits mit dem Federelementträger verbunden ist, welcher vorzugsweise drehbar um eine zweite Drehachse mit dem ersten Scherenarm und drehbar um eine dritte Drehachse mit dem zweiten Scherenarm verbunden ist, und wobei das erste Federelement in einem ersten Winkel zu einer Fahrzeugsitzbreitenrichtung und in einem zweiten Winkel zu einer Fahrzeugsitzhöhenrichtung angeordnet ist.

Alternativ wird die zugrunde liegende Aufgabe gelöst von einem Fahrzeugsitz mit den Merkmalen des Anspruchs 12.

Unter einer Wankbewegung wird hierbei eine Rotationsbewegung des Fahrzeugsitzes um eine Drehachse, welche in Fahrzeugsitzlängsrichtung verlaufend angeordnet ist, verstanden.

Besonders bevorzugt ist daher die erste Drehachse parallel zu der Fahrzeugsitzlängsrichtung angeordnet.

Gemäß einer bevorzugten Ausführungsform ist es auch vorgesehen, dass das Fahrzeugsitzoberteil und das Fahrzeugsitzunterteil mittels der Federeinheit relativ zueinander federbar bzw. bewegbar bzw. verlagerbar sind.

Gemäß einer besonders bevorzugten Ausführungsform ist das erste Federelement bevorzugt eines ausgewählt aus einer Luftfeder und einer mechanischen Feder.

Insbesondere ist das erste Federelement verlaufend in die Richtung des ersten Winkels und des zweiten Winkels angeordnet, das heißt, dass das erste Federelement in einem Standartkoordinatensystem gesehen schräg verlaufen angeordnet ist.

Das Standardkoordinatensystem ist dabei gebildet aus der Fahrzeugsitzlängsrichtung, der Fahrzeugsitzbreitenrichtung und der Fahrzeugsitzhöhenrichtung, welche jeweils in einem rechten Winkel zueinander angeordnet sind.

Dadurch, dass erfindungsgemäß das erste Federelement mit dem Federelementträger und dem Fahrzeugsitzunterteil verbunden ist, ist zu folgern, dass der erste Winkel und der zweite Winkel abhängig sind von einer Federposition des Fahrzeugsitzes. Durch eine Federbewegung welche eine Wank- und/oder Vertikalfederbewegung sein kann, ändert sich die Position des Federelementträgers im Raum, so dass ein erstes Ende des ersten Federelements ebenso seine Position im Raum verändert, wobei ein zweites Ende des ersten Federelements, welches mit dem Fahrzeugsitzunterteil verbunden ist, in seiner Position nicht verändert wird. Das heißt insbesondere, dass der erste Winkel und der zweite Winkel nicht konstant sind während einer Federbewegung des Fahrzeugsitzes. In einer Neutralstellung, das heißt, dass der Fahrzeugsitz keiner Federbewegung unterliegt, das heißt, dass es keine Relativbewegung des Fahrzeugsitzoberteils gegenüber dem Fahrzeugsitzunterteil gibt, so ist der erste Winkel und der zweite Winkel konstant.

Je nach Größe des ersten Winkels und des zweiten Winkels ist es möglich, die Federsteifigkeit des ersten Federelements einzustellen. Die Federsteifigkeit ist insbesondere eine Einstellmöglichkeit für die Vertikal- und für die Wankrichtung für die Federbewegung. Durch Einstellung des ersten Winkels und des zweiten Winkels ist es möglich, die Federsteifigkeit hinsichtlich der Vertikal- und der Wankrichtung beziehungsweise der Wankfederrichtung und der Vertikalfederrichtung einzustellen.

Besonders bevorzugt ist vorgesehen, dass sich der erste Scherenarm und der zweite Scherenarm in einem ersten Bereich in Fahrzeugsitzlängsrichtung gesehen kreuzen, wobei es dabei vorgesehen ist, dass zwischen dem ersten Scherenarm und dem zweiten Scherenarm keine bauliche Verbindung vorgesehen ist, mit Ausnahme des Federelementträgers. Das bedeutet insbesondere, dass bei einer Bewegung des Fahrzeugsitzoberteils gegenüber dem Fahrzeugsitzunterteil der erste Bereich, welcher den Kreuzungsbereich des ersten Scherenarms mit dem zweiten Scherenarm darstellt, entsprechend der Bewegung des Fahrzeugsitzes nachfolgen muss. Insbesondere ist hierbei zu verstehen, dass es keine gemeinsame Drehachse zwischen dem ersten Scherenarm und dem zweiten Scherenarm gibt.

Gemäß einer alternativen Ausgestaltung kann es sein, dass zwischen dem ersten Scherenarm und dem zweiten Scherenarm eine bauliche Verbindung vorgesehen ist, so dass die Scherenanordnung einem Scherengestell im herkömmlichen Sinne vorliegt, also die Scherenarme miteinander drehbar um eine gemeinsame Drehachse verbunden sind. Der Federelementträger ist in diesem Fall bevorzugt direkt an der gemeinsamen Drehachse befestigt.

Es kann vorgesehen sein, dass der erste Scherenarm und der zweite Scherenarm kraftverbunden sind, beispielsweise durch eine Reibungskraft, falls die Scherenarme miteinander in Kontakt stehen.

Durch die zuvor beschriebene Zwangsführung beziehungsweise Zwangsbewegung des Federelementträgers aufgrund der Bewegung des Fahrzeugsitzoberteils relativ zu dem Fahrzeugsitzunterteil wird eine Federkraft des ersten Federelements hervorgerufen, sodass eine Federung des Fahrzeugsitzes durch die Federeinheit hervorgerufen wird.

Allgemein gesprochen wird bei einer relativen Bewegung des Fahrzeugsitzoberteils gegenüber dem Fahrzeugsitzunterteil in einer vertikalen Richtung, das heißt in Fahrzeugsitzhöhenrichtung, aufgrund einer externen Krafteinwirkung auf dem Fahrzeugsitz durch die drehbare Anordnung des Federelementträgers an dem ersten Scherenarm beziehungsweise dem zweiten Scherenarm eine entsprechende Bewegung des Federelementträgers ausgeführt. Das heißt, dass bei einer vertikalen Auslenkung, also einer Auslenkung in einer Fahrzeugsitzhöhenrichtung, der Federelementträger eine lineare Verlagerung entsprechend dem Fahrzeugsitzoberteil in Fahrzeugsitzhöhenrichtung erfährt. Bei einer Wankbewegung des Fahrzeugsitzes, das heißt bei einer Drehung des Fahrzeugsitzoberteils gegenüber dem Fahrzeugsitzunterteil um die erste Drehachse wird der Federelementträger ebenso einer derartigen Wankbewegung unterworfen. Durch die Wankbewegung des Federelementträgers wird das erste Federelement deformiert, sodass eine Federkraft hervorgerufen wird, welche der Wankbewegung entgegenwirkt.

Gemäß einer besonders bevorzugten Ausführungsform ist es vorgesehen, dass die Federeinheit ein zweites Federelement umfasst, wobei das zweite Federelement einerseits mit dem Verschiebeelement und andererseits mit dem Federelementträger verbunden ist und wobei das zweite Federelement in einem dritten Winkel zu der Fahrzeugsitzbreitenrichtung und in einem vierten Winkel zu der Fahrzeugsitzhöhenrichtung angeordnet ist.

Besonders bevorzugt kann alternativ das zweite Federelement mit einem weiteren Verschiebeelement verbunden sein, welches unabhängig von dem Verschiebeelement ist. Das heißt, dass das Verschiebeelement und das weitere Verschiebeelement unabhängig voneinander sind.

Besonders bevorzugt ist das zweite Federelement derart angeordnet, dass bezüglich einer Ebene gebildet aus der Fahrzeugsitzlängsrichtung und der Fahrzeugsitzhöhenrichtung das erste Federelement auf einer ersten Seite der Ebene und das zweite Federelement auf der zweiten Seite der Ebene angeordnet sind.

Ebenso ist es möglich, dass der erste Winkel dem dritten Winkel entspricht und der zweite Winkel dem vierten Winkel entspricht, sodass das erste Federelement und das zweite Federelement hinsichtlich der Ebene gebildet aus Fahrzeugsitzlängsrichtung und Fahrzeugsitzhöhenrichtung symmetrisch zueinander angeordnet sind.

Es ist jedoch ebenso möglich, dass der erste Winkel einen anderen Wert aufweist als der dritte Winkel und dass der zweite Winkel einen anderen Wert als der vierte Winkel aufweist.

Es wird darauf hingewiesen, dass symmetrisch in dem Neutralzustand zu verstehen ist, das heißt, dass keine externe Kraft auf den Fahrzeugsitz einwirkt. Bei einer Federbewegung des Fahrzeugsitzes ändert sich die Anordnung der Federelemente zueinander, da insbesondere bei einer Wankbewegung ein Federelement komprimiert und das andere Federelement entsprechend dekomprimiert wird, das heißt ein Federelement wird gestaucht und das andere Federelement wird in seiner Länge gezogen.

Gemäß einer besonders bevorzugten Ausführungsform ist es vorgesehen, dass der erste Winkel und der zweite Winkel jeweils einen Wert aus einem Bereich ]0; 90°] annehmen können.

Gemäß einer weiteren bevorzugten Ausführungsform ist es vorgesehen, dass der dritte Winkel und der vierte Winkel jeweils einen Wert aus einem Bereich ]0; 90°] annehmen können.

Besonders bevorzugt ist es vorgesehen, dass der erste Winkel, der zweite Winkel, der dritte Winkel und der vierte Winkel nicht den Winkelwert 90° annehmen können, das heißt, dass die Winkel jeweils einen Wert in dem Bereich ]0; 90°[ annehmen können. Das heißt, dass insbesondere in Fahrzeugsitzhöhenrichtung gesehen die Federelemente nicht einer Vertikalfeder entsprechen.

Gemäß einer weiteren bevorzugten Ausführungsform ist es vorgesehen, dass die erste Drehachse parallel zu der Fahrzeugsitzlängsrichtung angeordnet ist, und bevorzugt die zweite Drehachse und die dritte Drehachse in Fahrzeugsitzbreitenrichtung verlaufend angeordnet sind und die zweite und die dritte Drehachse parallel zueinander angeordnet sind.

Insbesondere durch die Anordnung der zweiten Drehachse und der dritten Drehachse kann ein Verkanten der Scherenanordnung mit dem Federelementträger verhindert werden, insbesondere bei einer Relativbewegung des Fahrzeugsitzoberteils zu dem Fahrzeugsitzunterteil.

Gemäß einer besonders bevorzugten Ausführungsform ist es vorgesehen, dass die erste Drehachse durch eine Welle definiert ist, welche mit dem Fahrzeugsitzunterteil drehbar verbunden ist. Dabei weist die Welle vorzugsweise ein erstes Ende und ein zweites Ende auf, wobei das erste Ende und das zweite Ende jeweils starr mit dem Fahrzeugsitzunterteil verbunden sind. Anstelle einer Welle ist auch ein Stabelement denkbar, wobei die Welle, beziehungsweise das Stabelement zylindrisch oder kantig ausgebildet sein können. Wenn das Stabelement kantig ausgebildet ist, dann ist dieses drehbar mit dem Fahrzeugsitzunterteil verbunden.

Gemäß einer weiteren bevorzugten Ausführungsform ist es vorgesehen, dass der erste Scherenarm mittels eines ersten Loslagers mit dem Fahrzeugsitzoberteil und mittels eines zweiten Loslagers mit der Welle und der zweite Scherenarm mittels eines dritten Loslagers mit dem Fahrzeugsitzoberteil und mittels eines vierten Loslagers mit der Welle verbunden sind. Eine derartige Ausgestaltung ermöglicht zusätzlich eine Nickfederbewegung des Fahrzeugsitzes mittels der Federeinheit.

Gemäß der Ausgestaltung des ersten Scherenarms und des zweiten Scherenarms mittels von vier Loslagern zur Verbindung mit dem Fahrzeugsitzoberteil und dem Fahrzeugsitzunterteil wird erreicht, dass bei einer Nickbewegung des Fahrzeugsitzes und bei einer entsprechenden Nachfolgung des Fahrzeugsitzoberteils gegenüber dem Fahrzeugsitzunterteil der Nickbewegung des Fahrzeugsitzes gut nachgefolgt werden kann. Dadurch, dass vier Loslager vorgesehen sind, ist die Federeinheit mechanisch unbestimmt, das heißt, es existieren noch Freiheitsgrade, welche nicht hinreichend bestimmt werden können. Um diese Freiheitsgrade weiter zu minimieren, sind entsprechend ein erstes Verbindungselement und ein zweites Verbindungselement vorgesehen, welche durch die entsprechende Anordnung mit dem ersten Scherenarm und dem zweiten Scherenarm und dem Fahrzeugsitzoberteil und dem Fahrzeugsitzunterteil die Freiheitsgrade der vier Loslager minimiert. Besonders bevorzugt ist ein erstes Verbindungselement vorgesehen, welches den ersten Scherenarm mit einem Festlager, welches auf der ersten Drehachse und bevorzugt auf der Welle angeordnet ist, verbindet, und wobei ein zweites Verbindungselement vorgesehen ist, welches ein erstes Verbindungselementteil und ein zweites Verbindungselementteil aufweist, wobei das erste Verbindungselementteil mit dem zweiten Scherenarm und den zweiten Verbindungselementteil drehbar verbunden ist und wobei das zweite Verbindungselementteil mit dem ersten Verbindungselementteil, dem ersten Scherenarm und dem Fahrzeugsitzoberteil drehbar verbunden sind.

Alternativ kann die Scherenanordnung derart sein, dass der erste Scherenarm mittels eines Festlagers mit dem Fahrzeugsitzunterteil und mittels eines ersten Loslagers mit dem Fahrzeugsitzoberteil und der zweite Scherenarm mittels eines weiteren Festlagers mit dem Fahrzeugsitzoberteil und mittels eines vierten Loslagers mit dem Fahrzeugsitzunterteil verbunden ist.

Gemäß einer weiteren bevorzugten Ausführungsform ist es vorgesehen, dass das zweite Loslager und das vierte Loslager jeweils als ein Verlagerungselement ausgebildet sind, sodass jeweils der erste Scherenarm und der zweite Scherenarm gegenüber der Welle verlagerbar sind. Eine Verlagerung hinsichtlich der Welle heißt, dass eine Verlagerung des ersten Scherenarms und des zweiten Scherenarms in der Fahrzeugsitzlängsrichtung vorgesehen ist. Das Verlagerungselement kann dabei als ein Gleitelement oder als ein Rollelement ausgebildet sein, sodass eine leichtgängige Verlagerung des ersten Scherenarms und des zweiten Scherenarms gegenüber der Welle gewährleistet werden kann.

Gemäß einer weiteren bevorzugten Ausführungsform ist es vorgesehen, dass in Fahrzeugsitzlängsrichtung gesehen das zweite Loslager vor dem dritten Loslager und das erste Loslager vor den vierten Loslager angeordent ist.

Durch eine Wankbewegung des Fahrzeugsitzes und einer entsprechenden Nachführung des Federträgerelement, welches in Verbindung mit dem ersten, beziehungsweise dem zweiten Federelement steht, welche insbesondere elastisch deformierbar ausgebildet sein können, wird durch das Federträgerelement eine Deformierung der Federelemente hervorgerufen, wodurch eine Federkraft, beziehungsweise eine Rückstellkraft der Federelemente erzeugt wird.

Gemäß einer weiteren bevorzugten Ausführungsform ist eine Arretierungseinheit vorgesehen, so dass eine Bewegung der Federeinheit um die erste Drehachse arretierbar ist, so dass bevorzugt eine Rotationsbewegung um die erste Drehachse blockierbar ist. Dies ist vorteilhaft, wenn sich das Fahrzeug auf einem ebenen Untergrund bewegt, wie etwa einer Straße, wo im Regelfall keine oder geringe Wankbewegungen auftreten.

Alternativ wird die Aufgabe gelöst durch einen Fahrzeugsitz mit einer Federeinheit zum Federn von Wank- und Vertikalbewegungen des Fahrzeugsitzes, wobei der Fahrzeugsitz ein Fahrzeugsitzoberteil und ein Fahrzeugsitzunterteil aufweist, wobei das Fahrzeugsitzoberteil und das Fahrzeugsitzunterteil mittels der Federeinheit verbunden sind, so dass das Fahrzeugsitzoberteil und das Fahrzeugsitzunterteil relativ zueinander bewegbar sind, wobei die Federeinheit eine Scherenanordnung mit einem ersten Scherenarm und einem zweiten Scherenarm aufweist, wobei die Federeinheit drehbar um eine erste Drehachse mit dem Fahrzeugsitzunterteil verbunden ist und einen Federelementträger und ein erstes Federelement umfasst, wobei ein Verschiebeelement vorgesehen ist, welches gegenüber dem Fahrzeugsitzunterteil verschiebbar gelagert ist und wobei das erste Federelement einerseits mit dem Verschiebeelement und andererseits mit dem Fahrzeugsitzoberteil verbunden ist.

Die weiteren Ausgestaltungen der vorhergehenden Ausführungsformen sind in entsprechend analoger Art und Weise für diese alternative Ausführungsform gültig.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1A: Fahrzeugsitz gemäß einer bevorzugten Ausführungsform in einer perspektivischen Ansicht;
- Fig. 1B: Fahrzeugsitz nach Figur 1A in einer weitergehenden Ausführungsform;
- Fig. 2A: Fahrzeugsitz nach Figur 1A in einer Vorderansicht in einer neutralen Stellung;
- Fig. 2B: Fahrzeugsitz nach Figur 2A in einer nach unten ausgelenkten Stellung;
- Fig. 2C: Fahrzeugsitz nach Figur 2A in einer nach oben ausgelenkten Stellung;
- Fig. 3A: Fahrzeugsitz nach Figur 1A in einer Vorderansicht in der neutralen Stellung;
- Fig. 3B: Fahrzeugsitz nach Figur 3A in einer Wankstellung;
- Fig. 4A: Vergleich zwischen den Figuren 2B und 2C;
- Fig. 4B: Vergleich zwischen den Figuren 3A und 3B;
- Fig. 5: Fahrzeugsitz gemäß einer Ausführungsform mit verschiedenen Anstellwinkeln der Federelemente;
- Fig. 6A: Scherenanordnung nach einer ersten Ausführungsform;
- Fig. 6B: Scherenanordnung nach einer zweiten Ausführungsform;
- Fig. 7A: schematische Darstellung des Fahrzeugsitzes nach Figur 1A in der neutralen Stellung;
- Fig. 7B: schematische Darstellung des Fahrzeugsitzes nach Figur 1A in der nach unten verlagerten Stellung;
- Fig. 8A: Federträgerelement in einer ersten perspektivischen Ansicht;
- Fig. 8B: Federträgerelement in einer zweiten perspektivischen Ansicht.

In den Figuren werden gleiche Bauelemente mit den gleichen Bezugszeichen bezeichnet, wobei in machen Figuren die Bezugszeichen zur besseren Übersichtlichkeit weggelassen werden können.

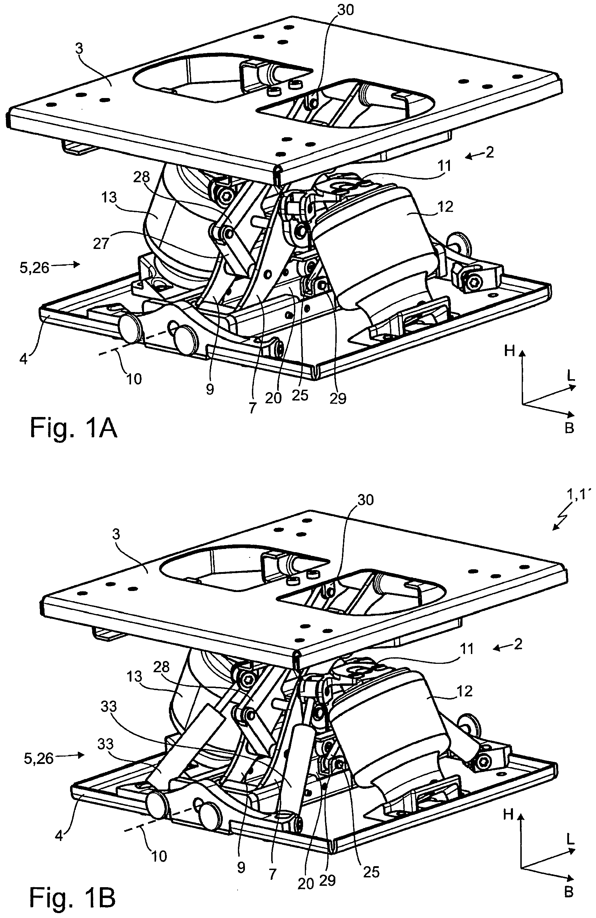

In der Figur 1A ist ein Fahrzeugsitz 1, beziehungsweise ein Fahrzeugsitzunterbau 1' dargestellt, wobei der Fahrzeugsitz 1 ein Fahrzeugsitzoberteil 3 und ein Fahrzeugsitzunterteil 4 aufweist, welche mittels einer Federeinheit 2 miteinander derart verbunden sind, dass das Fahrzeugsitzoberteil und das Fahrzeugsitzunterteil relativ zueinander bewegbar und federbar sind. Weiter ist zu erkennen, dass die Federeinheit 2 drehbar um eine erste Drehachse 10 mit dem Fahrzeugsitzunterteil 4 verbunden ist.

Weiter bevorzugt ist eine Arretierungseinheit 51 vorgesehen umfassend ein erstes Schraubenelement 49 und ein zweites Schraubenelement 50. Die Schraubenelemente 49, 50 können durch eine Drehbewegung das Fahrzeugsitzunterteil 4 und die Federeinheit 2 miteinander verbinden, so dass keine Bewegung der Federeinheit 2 um die erste Drehachse 10 mehr möglich ist. Besonders bevorzugt können die Schraubenelemente 49, 50 mit einem Trageteil 40 verbunden werden. Die Schraubenelemente 49, 50 sind bevorzugt als Rändelschrauben ausgebildet. Weiter bevorzugt sind die Schraubenelemente 49, 50 in einem Abstand zu der ersten Drehachse 10 angeordnet, insbesondere symmetrisch hinsichtlich der ersten Drehachse 10.

Die Federeinheit umfasst eine Scherenanordnung 5 mit einem ersten Scherenarm 6 und einem zweiten Scherenarm 7, wobei die Federeinheit weiter einen Federelementträger 11 und ein erstes Federelement 12 sowie ein zweites Federelement 13 aufweist. Wie zu erkennen ist, ist der Federelementträger drehbar um eine zweite Drehachse mit dem ersten Scherenarm und drehbar um eine dritte Drehachse 15 mit dem zweiten Scherenarm 7 verbunden, wobei das erste Federelement 12 einerseits mit dem Fahrzeugsitzunterteil 4 und andererseits mit dem Federelementträger 11 verbunden ist, wobei weiter das erste Federelement 12 in einem ersten Winkel 16 zu einer Fahrzeugsitzbreitenrichtung B und in einem zweiten Winkel 17 zu einer Fahrzeugsitzhöhenrichtung H angeordnet ist.

Die nähere Anordnung der Federelemente 12, 13 sowie die nähere Ausgestaltung der Scherenanordnung 5 wird in den nachfolgenden Figuren weiter beschrieben.

Die erste Luftfeder 12, beziehungsweise die zweite Luftfeder 13 sind in der Figur 1A als eine elastisch deformierbare Luftfeder ausgebildet, wobei es auch weiter denkbar ist, dass das erste Federelement 12 und das zweite Federelement 13 als eine mechanische Feder ausgebildet sein können.

Es ist weiterhin denkbar, dass das erste Federelement 12 als eine Luftfeder ausgebildet ist und das zweite Federelement 13 als eine mechanische Feder, oder umgekehrt.

Weiter weist die Scherenanordnung 5 ein erstes Verbindungselement 25 und ein zweites Verbindungselement 26 auf, wobei das zweite Verbindungselement 25 ein erstes Verbindungselementteil 27 und ein zweites Verbindungselementteil 28 aufweist, wobei das erste Verbindungselement 25 drehbar mit dem ersten Scherenarm 6 verbunden ist und andererseits mit einem ersten Festlager 29 verbunden ist, wobei das erste Festlager 29 mit einer Welle 20 verbunden ist.

Weiter ist das erste Verbindungselementteil 27 drehbar mit dem zweiten Scherenarm 7 sowie drehbar mit dem zweiten Verbindungselementteil 28 verbunden, wobei das zweite Verbindungselementteil 28 weiter drehbar mit dem ersten Scherenarm 7 und mittels eines Festlagers 30 mit dem Fahrzeugsitzoberteil 3 verbunden ist.

Die Figur 1B zeigt den gleichen Fahrzeugsitz 1 wie in der Figur 1A dargestellt, wobei zusätzlich Dämpferelemente 33 vorgesehen sind, wobei mindestens 1 Dämpferelement 33 bevorzugt mindestens 2 Dämpferelemente 33 und besonders bevorzugt vier Dämpferelemente 33 vorgesehen sind, welche jeweils in einem Winkel zu der Fahrzeugsitzlängslichtung L, der Fahrzeugsitzbreitenrichtung B und der Fahrzeugsitzhöhenrichtung H angeordnet sind. Weiter sind die Dämpferelemente 33 einerseits mit dem Federelementträger 11 verbunden und andererseits mit dem Fahrzeugsitzunterteil 4.

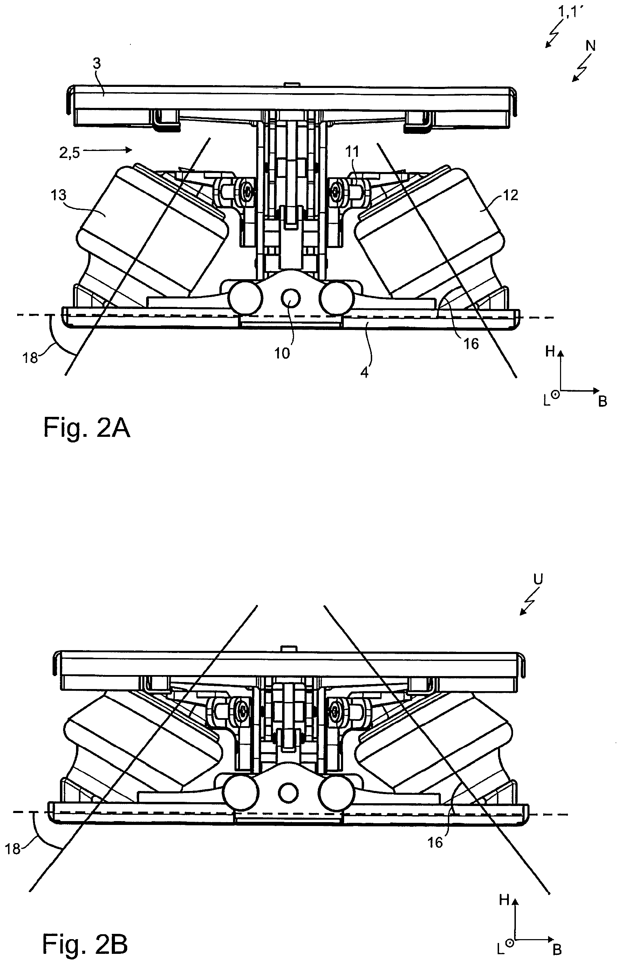

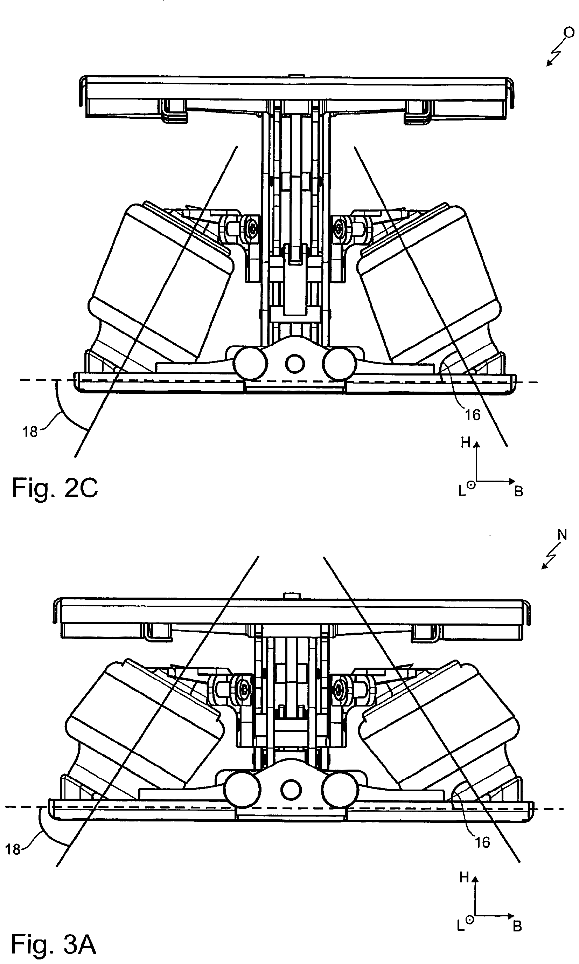

In den Figuren 2A, 2B und 2C ist der Fahrzeugsitz nach Figur 1A in einer Vorderansicht dargestellt, wobei in der Figur 2A der Fahrzeugsitz 1 in einer neutralen Stellung N dargestellt ist, in der Figur 2B in einer nach unten ausgelenkten Stellung U und in der Figur 2C in einer nach oben ausgelenkten Stellung O, wobei nach oben, beziehungsweise nach unten jeweils natürlich in Fahrzeugsitzhöhenrichtung H zu verstehen ist.

Bezüglich der Figur 2A welche den Fahrzeugsitz 1 in der neutralen Stellung N darstellt, ist zu erkennen, dass das erste Federelement 12 in einem ersten Winkel 16 und das zweite Federelement 13 in einem dritten Winkel 18 zu der Fahrzeugsitzbreitenrichtung B angeordnet sind. Erfindungsgemäß ist es vorgesehen, dass das erste Federelement 12, beziehungsweise das zweite Federelement 13 einerseits mit dem Federelementträger 11 verbunden sind und andererseits mit dem Fahrzeugsitzunterteil 4. Bei einer Federbewegung in Fahrzeugsitzhöhenrichtung H, das heißt in vertikaler Richtung des Fahrzeugsitzes 1, ist es dadurch vorgesehen, dass das erste Federelement 12, beziehungsweise das zweite Federelement 13 durch die Verbindung zu dem Fahrzeugsitzunterteil 4 an dieser Stelle in ihrer Position verändert wird, jedoch bewegt sich der Federelementträger 11 bei einer Bewegung in Fahrzeugsitzhöhenrichtung in Richtung H natürlich ebenso in Fahrzeugsitzhöhenrichtung H nach oben, beziehungsweise nach unten. Das heißt, dass sich die Verbindungsstelle zwischen den Federelementen 12, 13 mit dem Federelementträger 11 ebenso in Fahrzeugsitzhöhenrichtung H nach oben, beziehungsweise nach unten bewegt. Das bedeutet, dass der erste Winkel 16, beziehungsweise der dritte Winkel 18 während einer Federbewegung in Fahrzeugsitzhöhenrichtung H nicht konstant sind.

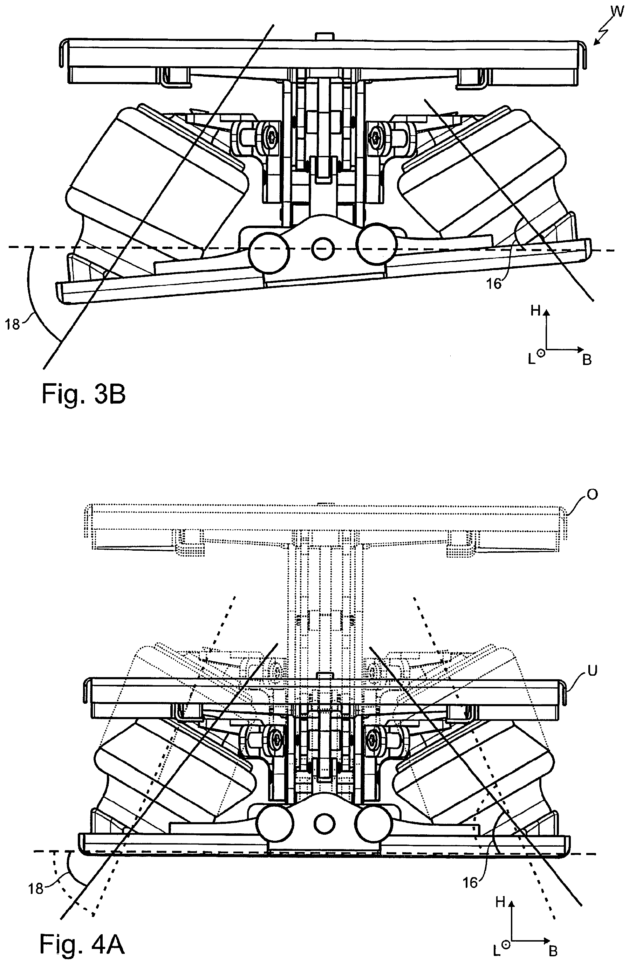

Gleiches gilt auch für die Figuren 3A und 3B, wobei in der Figur 3A der Fahrzeugsitz in der Neutralstellung dargestellt ist und in Figur 3B der Fahrzeugsitz nach einer Wankbewegung W. Hierbei ist es zu beachten, dass sich nicht die Verbindung zwischen den Federelementen 12, 13 mit dem Federelementträger bewegt, sondern sich die untere Verbindung zwischen dem Federelementen 12, 13 und dem Fahrzeugsitzunterteil 4 in seiner Position verändert. Es kann aber auch der umgekehrte Fall eintreten, je nach Einbausituation und auftretendem Schwingfall.

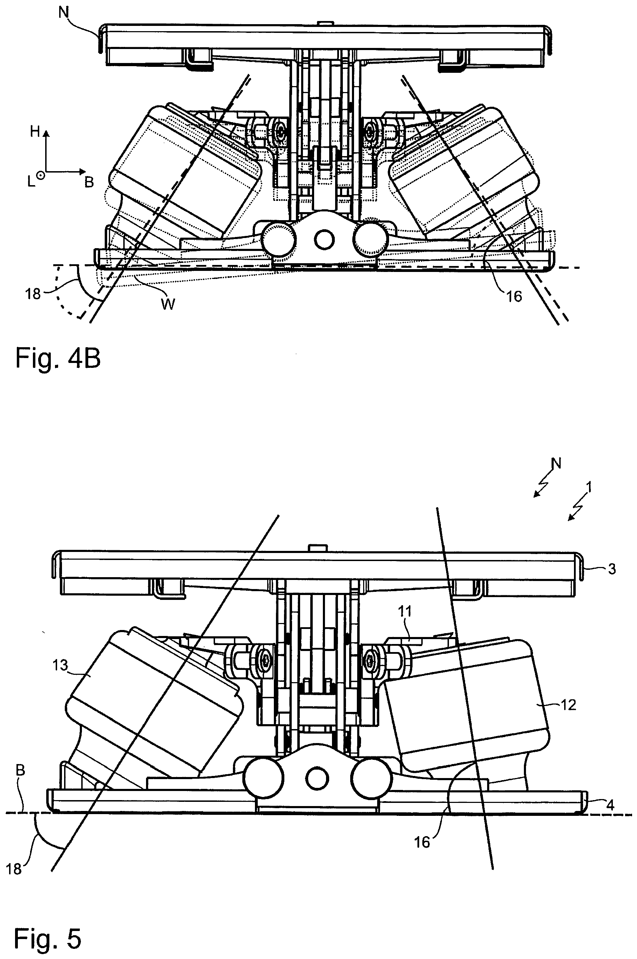

Die Veränderung der Winkel 16, 17, 18, 19 ist einem Vergleich der Figuren 2A - 2C und der Figuren 3A und 3B zu entnehmen. Eine Überlagerung der Figur 2A - 2C ist der Figur 4A und eine Überlagerung der Figuren 3A und 3B ist der Figur 4B zu entnehmen. Die Winkeländerung wird dabei schematisch nochmals dargestellt.

Bezugnehmend auf die Figur 4A, in welcher einerseits der Fahrzeugsitz 1 in einer nach unten ausgelegten Stellung U, dargestellt durch die durchgezogenen Linien, und einer nach oben ausgelegten Stellung O dargestellt durch die gestrichelten Linien, dargestellt ist, wobei die Veränderung des zugehörigen ersten Winkels 16, beziehungsweise des dritten Winkels 18 zu erkennen ist.

In der Figur 4B ist entsprechend der Vergleich der Figuren 3A und 3B dargestellt, wobei durch die durchgezogenen Linien eine neutrale Stellung N des Fahrzeugsitzes 1 dargestellt ist und durch die gestrichelten Linien die Wankstellung W des Fahrzeugsitzes 1.

Aus der Figur 5 ist ebenso der Fahrzeugsitz 1 gemäß der Figur 2A zu entnehmen, wobei hierbei die Anstellwinkel, das heißt der erste Winkel 16 und der dritte Winkel 18, voneinander verschieden sind. Das heißt, dass der erste Winkel 16 einen anderen Winkel aufweist als der dritte Winkel 18.

Im Allgemeinen gilt die Beschreibung hinsichtlich des ersten Winkels 16 und des dritten Winkels 18 ebenso für den zweiten Winkel 17 und den vierten Winkel 19.

Mit dem Einstellen der Winkel 16, 17, 18, 19 werden die Federsteifigkeiten in Wank- und Vertikalfederrichtung abgestimmt. Da der Federelementträger 11 in seiner Position durch die zugehörigen Drehachsen unveränderbar angeordnet ist, werden die Federanbindungspunkte gegenüber dem Fahrzeugsitzunterteil 4 in dem Abstand zu der ersten Drehachse 10 verändert, wodurch eine Winkeländerung der Winkel 16, 17, 18, 19 hervorgerufen wird.

Es kann jedoch auch vorgesehen sein, dass in einer neutralen Stellung N des Fahrzeugsitzes 1 der erste Winkel 16 dem dritten Winkel 18 entspricht und der zweite Winkel 17 dem vierten Winkel 19 entspricht.

Durch die Ausgestaltung mit verschiedenen Winkeln für das jeweilige Federelement 12, 13 ist es möglich, die Federsteifigkeit der Federelemente 12, 13 einzustellen.

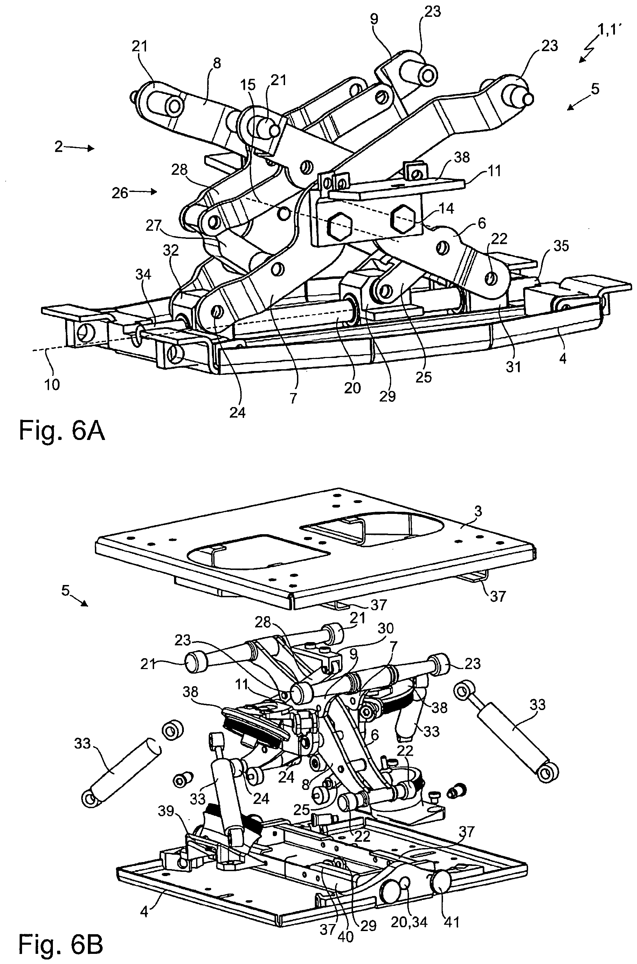

In der Figur 6A ist eine erste Ausführungsform der Scherenanordnung 5 und in der Figur 6B eine zweite Ausführungsform der Scherenanordnung 5 zu erkennen.

Zunächst wird die Ausführungsform der Scherenanordnung 5 gemäß der Figur 6A beschrieben.

Die Scherenanordnung 5 umfasst einen ersten Scherenarm 6, einen zweiten Scherenarm 7, einen dritten Scherenarm 8 und einen vierten Scherenarm 9.

Die Ausführungen des dritten Scherenarms 8 und des vierten Scherenarms 9 gelten entsprechend dem zugehörigen ersten Scherenarm 5 und dem zugehörigen zweiten Scherenarm 7. Dies gilt insbesondere, da der dritte Scherenarm 8 identisch verlaufend mit dem ersten Scherenarm 6 und der vierte Scherenarm 9 mit dem zweiten Scherenarm 7 ist.

Wie weiter zu erkennen, ist der Federelementträger 11 vorgesehen, welcher drehbar um eine zweite Drehachse 14 mit dem ersten Scherenarm 6 und drehbar um eine dritte Drehachse 15 mit dem zweiten Scherenarm 7 verbunden ist.

Weiter ist der erste Scherenarm 6 mittels eines ersten Loslagers 21 mit dem Fahrzeugsitzoberteil 3 und mittels eines zweiten Loslagers 22 mit einer Welle 20 und der zweite Scherenarm 7 mittels eines dritten Loslagers 23 mit dem Fahrzeugsitzoberteil 3 und mittels eines vierten Loslagers 24 mit der Welle 20 verbunden, wobei ein erstes Verbindungselement 25 den ersten Scherenarm 6 mit einem ersten Festlager 29, welches auf der Welle 20 angeordnet ist, verbindet, und wobei ein zweites Verbindungselement 26 vorgesehen ist, welches ein erstes Verbindungselementteil 27 und ein zweites Verbindungselementteil 28 aufweist, wobei das erste Verbindungselementteil 27 mit dem zweiten Scherenarm 7 und dem zweiten Verbindungselementteil 28 drehbar verbunden ist, und wobei das zweite Verbindungselementteil 28 mit dem ersten Verbindungselementteil 27, dem ersten Scherenarm 6 und dem Fahrzeugsitzoberteil 3 drehbar verbunden ist. Dabei ist das zweite Verbindungselementteil 28 insbesondere mit einem zweiten Festlager 30 drehbar verbunden. Das zweite Festlager ist dabei an dem Fahrzeugsitzoberteil 3 angeordnet.

Das erste Loslager 21 und das zweite Loslager 23 sind jeweils als Laufrollen 36 ausgebildet, welche mit dem jeweiligen Scherenarm 6, 7, 8, 9 drehbar verbunden ist und in einer Laufschiene 37 rollend gelagert ist, wobei die Laufschiene 37 an dem Fahrzeugsitzoberteil 3 angeordnet ist.

Das zweite Loslager 22, beziehungsweise das vierte Loslager 24 ist dabei derart ausgebildet, dass ein erstes Verlagerungselement 31 und ein zweites Verlagerungselement 32 vorgesehen sind, wobei an dem ersten Verlagerungselement der erste Scherenarm 6 drehbar verbunden ist und an dem zweiten Verlagerungselement 32 der zweite Scherenarm 7 drehbar angeordnet ist.

Die Verlagerungselemente 31, 32 sind dabei derart verlagerbar, dass sie gegenüber der Welle 20 verlagerbar sind in Richtung der ersten Drehachse 10. Weiter bevorzugt sind die Verlagerungselemente 31, 32 drehbar um die erste Drehachse 10 gelagert, im Fall einer im Wesentlichen zylindrisch ausgestalteten Welle 20.

Eine Verlagerung des ersten Verlagerungselements 31 und des zweiten Verlagerungselements 32 erfolgt insbesondere bei einer Vertikalbewegung des Fahrzeugsitzes 1.

Dadurch, dass die Scherenarme 6, 7, 8, 9 jeweils mittels eines Loslagers mit dem Fahrzeugsitzunterteil 4, beziehungsweise dem Fahrzeugsitzoberteil 3 verbunden sind, ist es notwendig, die Freiheitsgrade hinsichtlich der Bewegung der Scherenanordnung 5 einzugrenzen. Dies geschieht mittels des ersten Verbindungselements 25 und des zweiten Verbindungselements 26.

Weiter weist der Federelementträger 11 eine Adapterplatte 38 auf, mittels welcher das jeweilige Federelement 12, 13 (hier nicht dargestellt) mit dem Federelementträger 11 verbunden werden kann.

Die zweite Ausführungsform, welche in der Figur 6B dargestellt ist, ist vom Funktionsprinzip identisch mit der Ausführungsform der Figur 6A, wobei jedoch die Ausgestaltung sich unterscheidet.

Die Ausführungsform der Figur 6B umfasst ebenso einen ersten Scherenarm 6, einen zweiten Scherenarm 7, einen dritten Scherenarm 8, und einen vierten Scherenarm 9, wobei der erste

Scherenarm 6 und der dritte Scherenarm 8 sowie der zweite Scherenarm 7 und der vierte Scherenarm 9 jeweils identisch verlaufend sind. Ebenso sind die jeweiligen Scherenarme 6, 7, 8, 9 mittels eines Loslagers 21, 23 welches ausgebildet ist als eine Laufrolle 36, in der Führungsschiene 37 des Fahrzeugsitzoberteil 3 geführt.

Ebenso weist diese Ausführungsform das erste Verbindungselement 25 und das zweite Verbindungselement 26 auf, in derselben Anordnung und Funktion wie in der Figur 6A beschrieben.

Unterschiedlich ist hierbei die Anordnung der Loslager 22, 24 gegenüber dem Fahrzeugsitzunterteil 4. Es ist insbesondere ein Trageteil 40 dargestellt, welches drehbar um die erste Drehachse 10 mit dem Fahrzeugsitzunterteil 4 verbunden ist. Dabei ist eine Welle 20 vorgesehen an dem vorderen und dem hinteren Ende des Trageteils in Fahrzeugsitzlängsrichtung L, wobei das Trageteil 40 ebenso Laufschienen 37 aufweist, in welchen die Loslager 22, 24 mittels Laufrollen 36 abrollen können gegenüber dem Trageteil 40.

Weiter ist auf dem Trageteil 40 das erste Festlager 29 angeordnet, mittels welchem der erste Scherenarm 6 mittels des ersten Verbindungselements 25 verbunden ist.

In der Figur 6B ist ebenso schematisch eine untere Adapterplatte 39 dargestellt, mittels welcher das Federelement 12, 13 jeweils mit dem Fahrzeugsitzunterteil 4 verbunden werden kann. Wie zu erkennen ist, weist die untere Adapterplatte 39 einen schrägen Anteil auf, mittels welchem der Winkel des entsprechenden Federelements 12, 13 und der daraus resultierende Abstand zu der ersten Drehachse 10 eingestellt werden kann.

Gleiches gilt ebenso für die obere Adapterplatte 38, welche gegenüber der Fahrzeugsitzbreitenrichtung B einen Winkel aufweist, wobei die Schrägstellung der oberen Adapterplatte 38 und der unteren Adapterplatte 39 parallel zueinander ist. Es kann jedoch auch ein Winkelversatz zwischen den Adapterplatten 38, 39 vorgesehen oder zulässig sein.

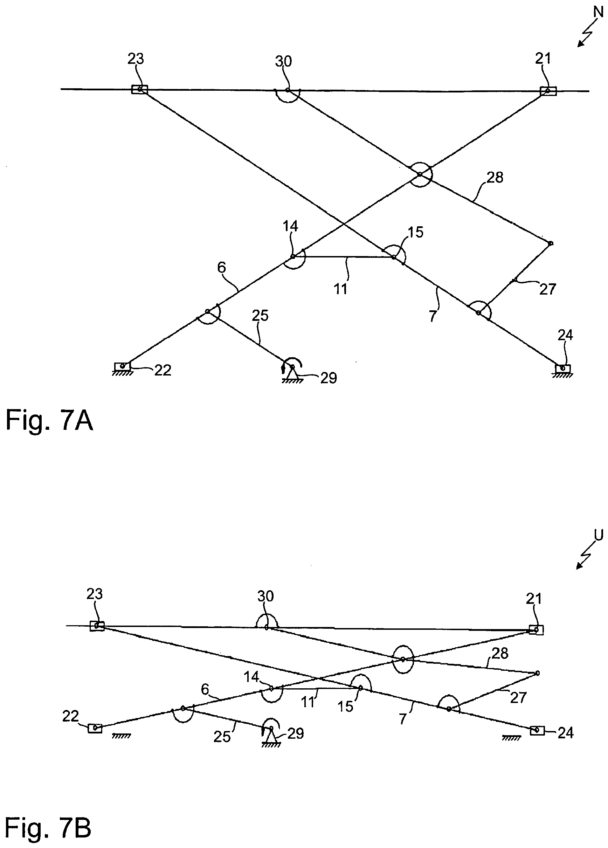

In den Figuren 7A und 7B ist die Kinematik der beweglichen Teile des Fahrzeugsitzes 1 nochmal schematisch dargestellt.

In der Figur 7A ist der Fahrzeugsitz in der Neutralstellung N und in der Figur 7B in der nach unten ausgelegten Stellung U dargestellt.

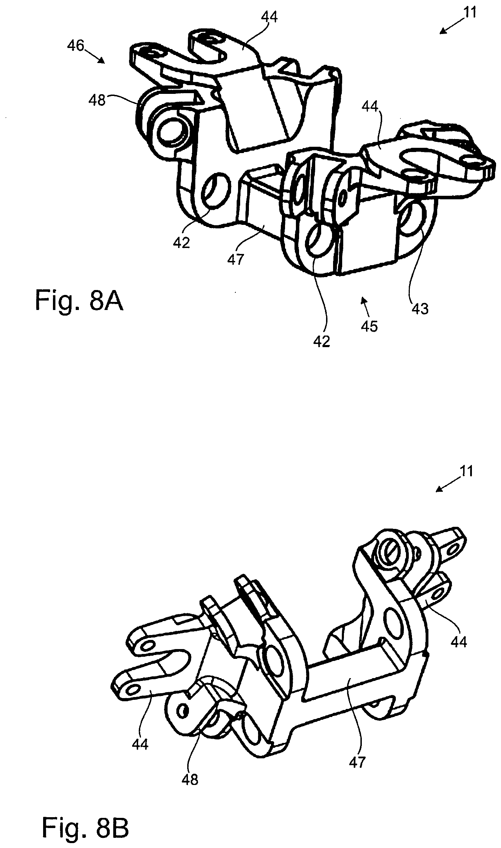

Die Bewegung der beweglichen Teile, welche mit dem entsprechenden Bezugszeichen bezeichnet sind, können durch einen Vergleich der Figuren 7A und 7B entnommen werden. Weiter ist in den Figuren 8A und 8B der Federelementträger 11 in einer ersten perspektivischen und in einer zweiten perspektivischen Darstellung dargestellt.

Der Federelementträger 11 weist dabei eine erste Federelementträgerhalterung 45 und eine zweite Federelementträgerhalterung 46 auf, welche mittels eines Verbindungsteils 47 miteinander verbunden sind. Die jeweilige Federelementträgerhalterung 45, 46 weist eine erste Verbindungsstelle 42 und eine zweite Verbindungsstelle 43 auf, mittels welchen der Federelementträger mit dem ersten Scherenarm 6 und dem zweiten Scherenarm 7, beziehungsweise dem drittem Scherenarm 8 und dem vierten Scherenarm 9 verbunden werden kann, insbesondere drehbar.

Weiter weist sowohl die erste Federelementhalterung 45 als auch die zweite Federelementhalterung 46 eine Adapterplattenhalterung 44 auf, mittels welcher die obere Adapterplatte 38 mit dem Federelementträger verbunden werden kann.

### Bezugszeichenliste

- 1: Fahrzeugsitz
- 2: Federeinheit
- 3: Fahrzeugsitzoberteil
- 4: Fahrzeugsitzunterteil
- 5: Scherenanordnung
- 6: erster Scherenarm
- 7: zweiter Scherenarm
- 8: dritter Scherenarm
- 9: vierter Scherenarm
- 10: erste Drehachse
- 11: Federelementträger
- 12: erstes Federelement
- 13: zweites Federelement
- 14: zweite Drehachse
- 15: dritte Drehachse
- 16: erster Winkel
- 17: zweiter Winkel
- 18: dritter Winkel
- 19: vierter Winkel
- 20: Welle
- 21: erstes Loslager
- 22: zweites Loslager
- 23: drittes Loslager
- 24: viertes Loslager
- 25: erstes Verbindungselement
- 26: zweites Verbindungselement
- 27: erstes Verbindungselementteil
- 28: zweites Verbindungselementteil
- 29: erstes Festlager
- 30: zweites Festlager
- 31: erstes Verlagerungselement
- 32: zweites Verlagerungselement
- 33: Dämpferelement
- 34: erstes Ende der Welle
- 35: zweites Ende der Welle
- 36: Laufrolle
- 37: Laufschiene
- 38: Adapterplatte
- 39: untere Adapterplatte
- 40: Trageteil
- 41: Arretierungselement
- 42: erste Verbindungsstelle
- 43: zweite Verbindungsstelle
- 44: Adapterplattenhalterung
- 45: erste Federelementträgerhalterung
- 46: zweite Federelementträgerhalterung
- 47: Verbindungteil
- 48: Dämpferelementhalterung
- 49: erstes Schraubenelement
- 50: zweites Schraubenelement
- 51: Arretierungseinheit
- N: neutrale Stellung
- O: nach oben ausgelenkte Stellung
- U: nach unten ausgelenkte Stellung
- W: Wankstellung
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) mit einer Federeinheit (2) mit einem ersten Federelement (12) zum Federn von Wank- und Vertikalbewegungen des Fahrzeugsitzes (1), wobei der Fahrzeugsitz (1) ein Fahrzeugsitzoberteil (3) und ein Fahrzeugsitzunterteil (4) aufweist, wobei bei der Wankbewegung des Fahrzeugsitzes (1) eine Drehung des Fahrzeugsitzoberteils (3) gegenüber dem Fahrzeugsitzunterteil (4) um eine erste Drehachse (10) stattfindet, wobei das Fahrzeugsitzoberteil (3) und das Fahrzeugsitzunterteil (4) mittels der Federeinheit (2) verbunden sind, so dass das Fahrzeugsitzoberteil (3) und das Fahrzeugsitzunterteil (4) relativ zueinander bewegbar sind, wobei die Federeinheit (2) eine Scherenanordnung (5) mit einem ersten Scherenarm (6) und einem zweiten Scherenarm (7) aufweist, wobei die Federeinheit (2) drehbar um die erste Drehachse (10) mit dem Fahrzeugsitzunterteil (4) verbunden ist und ein Federelementträger (11) umfasst, wobei das erste Federelement (12) einerseits mit dem Fahrzeugsitzunterteil (4) und andererseits mit dem Federelementträger (11) verbunden ist, und wobei das erste Federelement (12) in einem ersten Winkel (16) zu einer Fahrzeugsitzbreitenrichtung (B) und in einem zweiten Winkel (17) zu einer Fahrzeugsitzhöhenrichtung (H) angeordnet ist.

2. Fahrzeugsitz (1) nach Anspruch 1, **dadurch gekennzeichnet, dass** die Federeinheit (2) ein zweites Federelement (13) umfasst, wobei das zweite Federelement (13) einerseits mit dem Fahrzeugsitzunterteil (4) und andererseits mit dem Federelementträger (11) verbunden ist und wobei das zweite Federelement (13) in einem dritten Winkel (18) zu der Fahrzeugsitzbreitenrichtung (B) und in einem vierten Winkel (19) zu der Fahrzeugsitzhöhenrichtung (H) angeordnet ist.

3. Fahrzeugsitz (1) nach Anspruch 1 oder 2,
**dadurch gekennzeichnet, dass**
der erste Winkel (16) und der zweite Winkel (17) jeweils einen Wert aus einem Bereich ]0; 90°], bevorzugter aus einem Bereich ]0; 90°[, aufweisen.

4. Fahrzeugsitz (1) nach Anspruch 2,
**dadurch gekennzeichnet, dass**
der dritte Winkel (18) und der vierte Winkel (19) jeweils einen Wert aus einem Bereich ]0; 90°], bevorzugter aus einem Bereich ]0; 90°[, aufweisen.

5. Fahrzeugsitz (1) nach einem der Ansprüche 1 bis 4,
**dadurch gekennzeichnet, dass**
die erste Drehachse (10) definiert ist durch eine Welle (20).

6. Fahrzeugsitz (1) nach einem der Ansprüche 1 bis 5,
**dadurch gekennzeichnet, dass**
der erste Scherenarm (6) mittels eines ersten Loslagers (21) mit dem Fahrzeugsitzoberteil (3) und mittels eines zweiten Loslagers (22) gegenüber der ersten Drehachse (10) und der zweite Scherenarm (7) mittels eines dritten Loslagers(23) mit dem Fahrzeugsitzoberteil (3) und mittels eines vierten Loslagers (24) gegenüber der ersten Drehachse (10) verlagerbar verbunden sind, wobei ein erstes Verbindungselement (25) den ersten Scherenarm (6) mit einem ersten Festlager, welches gegenüber der ersten Drehachse (10) starr angeordnet ist, verbindet, und wobei ein zweites Verbindungselement (26) vorgesehen ist, welches ein erstes Verbindungselementteil (27) und ein zweites Verbindungselementteil (28) aufweist, wobei das erste Verbindungselementteil (27) mit dem zweiten Scherenarm (7) und dem zweiten Verbindungselementteil (28) drehbar verbunden ist, und wobei das zweite Verbindungselementteil (28) mit dem ersten Verbindungselementteil (27), dem ersten Scherenarm (6) und dem Fahrzeugsitzoberteil (3) drehbar verbunden ist.

7. Fahrzeugsitz nach einem der Ansprüche 1 bis 5,
**dadurch gekennzeichnet, dass**
der erste Scherenarm (6) mittels eines Festlagers mit einem Trageteil (40) und mittels eines ersten Loslagers (21) mit dem Fahrzeugsitzoberteil (3) und der zweite Scherenarm (7) mittels eines weiteren Festlagers mit dem Fahrzeugsitzoberteil (3) und mittels eines vierten Loslagers (24) mit dem Trageteil (40) verbunden ist.

8. Fahrzeugsitz (1) nach Anspruch 6,
**dadurch gekennzeichnet, dass**
das zweite Loslager (22) und das vierte Loslager (24) jeweils als ein Verlagerungselement ausgebildet sind, so dass jeweils der erste Scherenarm (6) und der zweite Scherenarm (7) gegenüber der Welle (20) verlagerbar sind.

9. Fahrzeugsitz (1) nach Anspruch 6 oder 8,
**dadurch gekennzeichnet, dass**
in der Fahrzeugsitzlängsrichtung (L) gesehen das zweite Loslager vor dem dritten Loslager und das erste Loslager vor dem vierten Loslager angeordnet ist.

10. Fahrzeugsitz (1) nach einem der Ansprüche 1 bis 9,
**dadurch gekennzeichnet, dass**
der Federelementträger drehbar um eine zweite Drehachse (14) mit dem ersten Scherenarm (6) und drehbar um eine dritte Drehachse (15) mit dem zweiten Scherenarm (7) verbunden ist.

11. Fahrzeugsitz (1) nach Anspruch 10,
**dadurch gekennzeichnet, dass**
die erste Drehachse (10) parallel zu der Fahrzeugsitzlängsrichtung (L) ist, und wobei die zweite Drehachse (14) und die dritte Drehachse (15) in Fahrzeugsitzbreitenrichtung (B) verlaufend angeordnet sind und die zweite (14) und die dritte Drehachse (15) parallel zueinander angeordnet sind.

12. Fahrzeugsitz (1) mit einer Federeinheit (2) mit einem Federelement (12) zum Federn von Wank- und Vertikalbewegungen des Fahrzeugs, wobei der Fahrzeugsitz (1) ein Fahrzeugsitzoberteil (3) und ein Fahrzeugsitzunterteil (4) aufweist, wobei bei der Wankbewegung des Fahrzeugsitzes (1) eine Drehung des Fahrzeugsitzoberteils (3) gegenüber dem Fahrzeugsitzunterteil (4) um eine erste Drehachse (10) stattfindet, wobei das Fahrzeugsitzoberteil (3) und das Fahrzeugsitzunterteil (4) mittels der Federeinheit (2) verbunden sind, so dass das Fahrzeugsitzoberteil (3) und das Fahrzeugsitzunterteil (4) relativ zueinander bewegbar sind, wobei die Federeinheit (2) eine Scherenanordnung (5) mit einem ersten Scherenarm (6) und einem zweiten Scherenarm (7) aufweist,
wobei die Federeinheit (2) drehbar um die erste Drehachse (10) mit dem Fahrzeugsitzunterteil (4) verbunden ist,
wobei das erste Federelement (12) einerseits mit dem Fahrzeugsitzunterteil (4) und andererseits mit dem Fahrzeugsitzoberteil (3) verbunden ist, und wobei das erste Federelement (12) in einem ersten Winkel (16) zu einer Fahrzeugsitzbreitenrichtung (B) und in einem zweiten Winkel (17) zu einer Fahrzeugsitzhöhenrichtung (H) angeordnet ist.

## Claims

1. Vehicle seat (1) having a suspension unit (2) having a first spring element (12) for cushioning rolling and vertical movements of the vehicle seat (1), wherein the vehicle seat (1) has a vehicle seat upper part (3) and a vehicle seat lower part (4), wherein during the rolling movement of the vehicle seat (1) a rotation of the vehicle seat upper part (3) with respect to the vehicle seat lower part (4) about a first axis of rotation (10) takes place, wherein the vehicle seat upper part (3) and the vehicle seat lower part (4) are connected by means of the suspension unit (2) so that the vehicle seat upper part (3) and the vehicle seat lower part (4) are movable relative to one another, wherein the suspension unit (2) has a scissor arrangement (5) having a first scissor arm (6) and a second scissor arm (7),
wherein the suspension unit (2) is connected rotatably about the first axis of rotation (10) to the vehicle seat lower part (4) and comprises a spring element support (11), the first spring element (12) being connected on the one hand to the vehicle seat lower part (4) and on the other hand to the spring element support (11), and the first spring element (12) being arranged at a first angle (16) to a vehicle seat width direction (B) and at a second angle (17) to a vehicle seat height direction (H).

2. Vehicle seat (1) according to claim 1,
**characterised in that**
the suspension unit (2) comprises a second spring element (13), the second spring element (13) being connected on the one hand to the vehicle seat lower part (4) and on the other hand to the spring element support (11), and the second spring element (13) being arranged at a third angle (18) to the vehicle seat width direction (B) and at a fourth angle (19) to the vehicle seat height direction (H).

3. Vehicle seat (1) according to either claim 1 or claim 2,
**characterised in that**
the first angle (16) and the second angle (17) each have a value from a range ]0; 90°], more preferably from a range ]0; 90°[.

4. Vehicle seat (1) according to claim 2,
**characterised in that**
the third angle (18) and the fourth angle (19) each have a value from a range ]0; 90°], more preferably from a range ]0; 90°[.

5. Vehicle seat (1) according to any of claims 1 to 4,
**characterised in that**
the first axis of rotation (10) is defined by a shaft (20).

6. Vehicle seat (1) according to any of claims 1 to 5,
**characterised in that**
the first scissor arm (6) is displaceably connected by means of a first floating bearing (21) to the vehicle seat upper part (3) and by means of a second floating bearing (22) with respect to the first axis of rotation (10), and the second scissor arm (7) is displaceably connected by means of a third floating bearing (23) to the vehicle seat upper part (3) and by means of a fourth floating bearing (24) with respect to the first axis of rotation (10), a first connecting element (25) connecting the first scissor arm (6) to a first fixed bearing which is arranged rigidly with respect to the first axis of rotation (10), and a second connecting element (26) being provided which has a first connecting element part (27) and a second connecting element part (28), wherein the first connecting element part (27) is rotatably connected to the second scissor arm (7) and the second connecting element part (28), and wherein the second connecting element part (28) is rotatably connected to the first connecting element part (27), the first scissor arm (6) and the vehicle seat upper part (3).

7. Vehicle seat according to any of claims 1 to 5,
**characterised in that**
the first scissor arm (6) is connected to a support part (40) by means of a fixed bearing and to the vehicle seat upper part (3) by means of a first floating bearing (21), and the second scissor arm (7) is connected to the vehicle seat upper part (3) by means of a further fixed bearing and to the support part (40) by means of a fourth floating bearing (24).

8. Vehicle seat (1) according to claim 6,
**characterised in that**
the second floating bearing (22) and the fourth floating bearing (24) are each designed as a displacement element so that the first scissor arm (6) and the second scissor arm (7) are in each case displaceable relative to the shaft (20).

9. Vehicle seat (1) according to either claim 6 or claim 8,
**characterised in that**
when viewed in the vehicle seat longitudinal direction (L), the second floating bearing (22) is arranged in front of the third floating bearing (23) and the first floating bearing (21) is arranged in front of the fourth floating bearing (24).

10. Vehicle seat (1) according to any of claims 1 to 9,
**characterised in that**
the spring element support (11) is rotatably connected about a second axis of rotation (14) to the first scissor arm (6) and rotatably connected about a third axis of rotation (15) to the second scissor arm (7).

11. Vehicle seat (1) according to claim 10,
**characterised in that**
the first axis of rotation (10) is parallel to the vehicle seat longitudinal direction (L), and wherein the second axis of rotation (14) and the third axis of rotation (15) are arranged extending in the vehicle seat width direction (B) and the second (14) and the third axis of rotation (15) are arranged parallel to one another.

12. Vehicle seat (1) having a suspension unit (2) having a spring element (12) for cushioning rolling and vertical movements of the vehicle, wherein the vehicle seat (1) has a vehicle seat upper part (3) and a vehicle seat lower part (4), wherein during the rolling movement of the vehicle seat (1) a rotation of the vehicle seat upper part (3) with respect to the vehicle seat lower part (4) about a first axis of rotation (10) takes place, wherein the vehicle seat upper part (3) and the vehicle seat lower part (4) are connected by means of the suspension unit (2) so that the vehicle seat upper part (3) and the vehicle seat lower part (4) are movable relative to one another, wherein the suspension unit (2) has a scissor arrangement (5) having a first scissor arm (6) and a second scissor arm (7),
wherein
the suspension unit (2) is connected rotatably about the first axis of rotation (10) to the vehicle seat lower part (4), the first spring element (12) being connected on the one hand to the vehicle seat lower part (4) and on the other hand to the vehicle seat upper part (3), and the first spring element (12) being arranged at a first angle (16) to a vehicle seat width direction (B) and at a second angle (17) to a vehicle seat height direction (H).

## Revendications

1. Siège de véhicule (1) comportant une unité de suspension (2) ayant un premier élément ressort (12) pour l'amortissement de mouvements de roulis et verticaux du siège de véhicule (1), le siège de véhicule (1) présentant une partie supérieure de siège de véhicule (3) et une partie inférieure de siège de véhicule (4), où, lors du mouvement de roulis du siège de véhicule (1), a lieu une rotation de la partie supérieure de siège de véhicule (3) par rapport à la partie inférieure de siège de véhicule (4) autour d'un premier axe de rotation (10), la partie supérieure de siège de véhicule (3) et la partie inférieure de siège de véhicule (4) étant reliées au moyen de l'unité de suspension (2) de telle sorte que la partie supérieure de siège de véhicule (3) et la partie inférieure de siège de véhicule (4) sont déplaçables l'une par rapport à l'autre, l'unité de suspension (2) présentant un dispositif à ciseaux (5) ayant un premier bras de ciseaux (6) et un second bras de ciseaux (7),
dans lequel l'unité de suspension (2) est reliée de manière rotative autour du premier axe de rotation (10) à la partie inférieure de siège de véhicule (4) et comporte un support d'élément ressort (11), dans lequel le premier élément ressort (12) est relié, d'une part, à la partie inférieure de siège de véhicule (4), et, d'autre part, au support d'élément ressort (11), et dans lequel le premier élément ressort (12) est disposé à un premier angle (16) par rapport à une direction de largeur de siège de véhicule (B) et à un deuxième angle (17) par rapport à une direction de hauteur de siège de véhicule (H).

2. Siège de véhicule (1) selon la revendication 1,
**caractérisé par le fait que**
l'unité de suspension (2) comporte un second élément ressort (13), le deuxième élément ressort (13) étant relié, d'une part, à la partie inférieure de siège de véhicule (4) et, d'autre part, au support d'élément ressort (11), et dans lequel le second élément ressort (13) est disposé à un troisième angle (18) par rapport à la direction de largeur de siège de véhicule (B) et à un quatrième angle (19) par rapport à la direction de hauteur de siège de véhicule (H).

3. Siège de véhicule (1) selon l'une des revendications 1 ou 2,
**caractérisé par le fait que**
le premier angle (16) et le deuxième angle (17) présentent chacun une valeur dans une plage de ]0 ; 90°], de préférence dans une plage de ]0 ; 90°[.

4. Siège de véhicule (1) selon la revendication 2,
**caractérisé par le fait que**
le troisième angle (18) et le quatrième angle (19) présentent chacun une valeur dans une plage de ]0 ; 90°], de préférence dans une plage de ]0 ; 90°[.

5. Siège de véhicule (1) selon l'une des revendications 1 à 4,
**caractérisé par le fait que**
le premier axe de rotation (10) est défini par un arbre (20).

6. Siège de véhicule (1) selon l'une des revendications 1 à 5,
**caractérisé par le fait que**
le premier bras de ciseaux (6) est relié de manière déplaçable au moyen d'un premier palier libre (21) à la partie supérieure de siège de véhicule (3) et au moyen d'un deuxième palier libre (22) par rapport au premier axe de rotation (10), et le second bras de ciseaux (7) est relié de manière déplaçable au moyen d'un troisième palier libre (23) à la partie supérieure de siège de véhicule (3) et au moyen d'un quatrième palier libre (24) par rapport au premier axe de rotation (10), un premier élément de liaison (25) reliant le premier bras de ciseaux (6) à un premier palier fixe, lequel est disposé de manière rigide par rapport au premier axe de rotation (10), et un second élément de liaison (26) étant prévu, lequel présente une première partie d'élément de liaison (27) et une seconde partie d'élément de liaison (28), la première partie d'élément de liaison (27) étant reliée de manière rotative au second bras de ciseaux (7) et à la seconde partie d'élément de liaison (28), et la seconde partie d'élément de liaison (28) étant reliée de manière rotative à la première partie d'élément de liaison (27), au premier bras de ciseaux (6) et à la partie supérieure de siège de véhicule (3).

7. Siège de véhicule selon l'une des revendications 1 à 5,
**caractérisé par le fait que**
le premier bras de ciseaux (6) est relié au moyen d'un palier fixe à une partie de support (40) et au moyen d'un premier palier libre (21) à la partie supérieure de siège de véhicule (3), et le second bras de ciseaux (7) est relié au moyen d'un autre palier fixe à la partie supérieure de siège de véhicule (3) et au moyen d'un quatrième palier libre (24) à la partie de support (40).

8. Siège de véhicule (1) selon la revendication 6,
**caractérisé par le fait que**
le deuxième palier libre (22) et le quatrième palier libre (24) sont chacun réalisés sous la forme d'un élément de déplacement de telle sorte que le premier bras de ciseaux (6) et le second bras de ciseaux (7) sont chacun déplaçables par rapport à l'arbre (20).

9. Siège de véhicule (1) selon l'une des revendications 6 ou 8,
**caractérisé par le fait que**
vu dans la direction longitudinale de siège du véhicule (L), le deuxième palier libre est disposé avant le troisième palier libre et le premier palier libre est disposé avant le quatrième palier libre.

10. Siège de véhicule (1) selon l'une des revendications 1 à 9,
**caractérisé par le fait que**
le support d'élément ressort est relié de manière rotative autour d'un deuxième axe de rotation (14) au premier bras de ciseaux (6) et de manière rotative autour d'un troisième axe de rotation (15) au second bras de ciseaux (7).

11. Siège de véhicule (1) selon la revendication 10, **caractérisé par le fait que**
le premier axe de rotation (10) est parallèle à la direction longitudinale de siège de véhicule (L), et dans lequel le deuxième axe de rotation (14) et le troisième axe de rotation (15) sont disposés de manière à s'étendre dans la direction de largeur de siège de véhicule (B), et le deuxième axe de rotation (14) et le troisième axe de rotation (15) sont disposés parallèlement l'un à l'autre.

12. Siège de véhicule (1) comportant une unité de suspension (2) comportant un élément ressort (12) pour l'amortissement de mouvements de roulis et verticaux du véhicule, le siège de véhicule (1) présentant une partie supérieure de siège de véhicule (3) et une partie inférieure de siège de véhicule (4), où, lors du mouvement de roulis du siège de véhicule (1), a lieu une rotation de la partie supérieure de siège de véhicule (3) par rapport à la partie inférieure de siège de véhicule (4) autour d'un premier axe de rotation (10), la partie supérieure de siège de véhicule (3) et la partie inférieure de siège de véhicule (4) étant reliées au moyen de l'unité de suspension (2) de telle sorte que la partie supérieure de siège de véhicule (3) et la partie inférieure de siège de véhicule (4) sont déplaçables l'une par rapport à l'autre, l'unité de suspension (2) présentant un dispositif à ciseaux (5) ayant un premier bras de ciseaux (6) et un second bras de ciseaux (7),
dans lequel l'unité de suspension (2) est reliée de manière rotative autour du premier axe de rotation (10) à la partie inférieure de siège de véhicule (4), dans lequel le premier élément ressort (12) est relié, d'une part, à la partie inférieure de siège de véhicule (4) et, d'autre part, à la partie supérieure de siège de véhicule (3), et dans lequel le premier élément ressort (12) est disposé à un premier angle (16) par rapport à une direction de largeur de siège de véhicule (B) et à un deuxième angle (17) par rapport à une direction de hauteur de siège de véhicule (H).
